# EUROPEAN PATENT APPLICATION

(11) **EP 4 207 904 A1**
(43) Date of publication of application: **05.07.2023**
(21) Application number: 21871196.8
(22) Date of filing: 26.08.2021
(51) Int. Cl.: H04W 72/04

(54) **BEAM MANAGEMENT METHOD, APPARATUS, AND SYSTEM**

(30) Priority: 23.09.2020 CN 202011006619
(71) Applicant: Huawei Technologies Co., Ltd., Shenzhen, Guangdong 518129 (CN)
(72) Inventor: ZHOU, Jianwei, Shenzhen, Guangdong 518129 (CN); LUO, Hejia, Shenzhen, Guangdong 518129 (CN); XU, Chenlei, Shenzhen, Guangdong 518129 (CN); WANG, Xiaolu, Shenzhen, Guangdong 518129 (CN); WANG, Jun, Shenzhen, Guangdong 518129 (CN)
(74) Representative: Epping - Hermann - Fischer
(86) International application number: PCT/CN2021/114709
(87) International publication number: WO 2022/062823

(57) **Abstract**

This application provides a beam management method, an apparatus, and a system, which are applicable to a non-terrestrial network NTN to implement beam management in NTN communication and reduce signaling overheads. In this method, a network device may determine a first transmission configuration indicator list and one or more beams that are in the first transmission configuration indicator list and that are to sequentially provide a service for a terminal device. When the first transmission configuration indicator list is the same as a transmission configuration indicator list determined by the network device last time, the network device indicates the terminal device to perform beam switching according to an arrangement order of TCI-states in a second transmission configuration indicator list. When the first transmission configuration indicator list is different from the transmission configuration indicator list determined by the network device last time, the first transmission configuration indicator list and a first TCI-state are indicated to the terminal device, so that the terminal device may perform beam switching from the first TCI-state according to an arrangement order of TCI-states in the first transmission configuration indicator list.

## Description

This application claims priority to Chinese Patent Application No. 202011006619.5, filed with the China National Intellectual Property Administration on September 23, 2020 and entitled "BEAM MANAGEMENT METHOD, APPARATUS, AND SYSTEM", which is incorporated herein by reference in its entirety.

### TECHNICAL FIELD

This application relates to the field of communication technologies, and in particular, to a beam management method, an apparatus, and a system.

### BACKGROUND

A main problem of high-frequency communication is that signal energy sharply decreases as a transmission distance increases, resulting in a short signal transmission distance. To overcome this problem, an analog beam technology is used in the high-frequency communication, and a large-scale antenna array is for weighting, so that the signal energy is concentrated in a small range to form a signal similar to an optical beam (referred to as an analog beam, a beam for short). As a result, a transmission distance is increased.

In a current new radio (new radio, NR) protocol, beam information may be indicated through a quasi colocation (quasi colocation, QCL) relationship between antenna ports. A QCL relationship indicates that beams corresponding to a plurality of antenna ports have one or more same or similar spatial characteristics. QCL information of a physical downlink shared channel (physical downlink shared channel, PDSCH) may be configured by using a transmission configuration indicator (transmission configuration indicator state, TCI). Specifically, a TCI state (TCI-state) may indicate a reference signal that has a QCL relationship with a demodulation reference signal (demodulation reference signal, DMRS) of a PDSCH.

In an existing NR beam management procedure, during beam switching, a network device sends downlink control information (downlink control information, DCI) to a terminal device to indicate a beam for receiving a PDSCH.

However, in a non-terrestrial network (non-terrestrial network, NTN), a beam scale is relatively large, and beam switching is frequent; consequently, an existing beam management method is no longer applicable. Therefore, it is necessary to design an appropriate solution to implement beam management in an NTN scenario.

### SUMMARY

This application provides a beam management method, an apparatus, and a system, which are applicable to an NTN to implement beam management in NTN communication and reduce signaling overheads.

To achieve the foregoing objective, the following technical solutions are used in this application.

According to a first aspect, a beam management method is provided. The method may be applied to an NTN scenario, for example, a satellite communication system. The method may be performed by a terminal device, or may be performed by a component of the terminal device, for example, a processor, a circuit, a chip, or a chip system of the terminal device. In this application, an example in which the method is performed by the terminal device is used for description. The method includes: The terminal device receives indication information from a network device. The terminal device performs beam switching according to an arrangement order of transmission configuration indicator states TCI-states in a second transmission configuration indicator list when the indication information is first indication information. The terminal device performs beam switching according to a first TCI-state in a first transmission configuration indicator list when the indication information is second indication information. The first transmission configuration indicator list includes a plurality of TCI-states including the first TCI-state. In the first transmission configuration indicator list, beams corresponding to TCI-states after the first TCI-state are beams that are to sequentially provide a service for the terminal device.

Based on this solution, one or more beams that are to sequentially provide a service for the terminal device are configured based on a transmission configuration indicator list. The terminal device may perform beam switching according to an indication of the network device and according to an arrangement order of TCI-states in the transmission configuration indicator list, so as to implement beam management. In addition, the transmission configuration indicator list may configure a plurality of TCI-states for the terminal device, so that the transmission configuration indicator list is applicable to large-scale beam configuration in an NTN scenario. Moreover, the network device does not need to send the TCI-state each time when the terminal device performs beam switching to indicate a to-be-switched beam, so that signaling overheads can be reduced and beam switching efficiency can be improved.

In some possible designs, the first indication information indicates the terminal device to perform beam switching according to the arrangement order of the TCI-states in the second transmission configuration indicator list. The second indication information indicates the first TCI-state and the first transmission configuration indicator list. Based on this solution, the terminal device may perform beam switching according to the first indication information and according to the arrangement order of the TCI-states in the second transmission configuration indicator list, or perform beam switching according to the second indication information and according to the first TCI-state.

In some possible designs, before the terminal device receives the indication information from the network device, the beam management method further includes: The terminal device receives one or more transmission configuration indicator lists. The one or more transmission configuration indicator lists include the first transmission configuration indicator list and/or the second transmission configuration indicator list. Based on this solution, after receiving the one or more transmission configuration indicator lists, the terminal device may store the one or more transmission configuration indicator lists, so as to subsequently perform beam switching according to an indication of the network device and according to the first transmission configuration indicator list or the second transmission configuration indicator list in the one or more transmission configuration indicator lists.

In some possible designs, the beam management method further includes: The terminal device receives request information from the network device through a message 2 in a random access process. The request information is for requesting a location of the terminal device. The terminal device further sends location information to the network device through a message 3 in the random access process. The location information indicates the location of the terminal device. Based on this solution, the location of the terminal device may be acquired in the random access process, and it is unnecessary to send a message to request the terminal device to report its location after the terminal device accesses the network device, so that signaling overheads can be reduced and the location of the terminal device can be acquired quickly.

In some possible designs, before receiving the indication information, the beam management method further includes: The terminal device receives third indication information from the network device. The third indication information indicates an initial TCI-state and an initial transmission configuration indicator list. The initial transmission configuration indicator list includes a plurality of TCI-states including the initial TCI-state. In the initial transmission configuration indicator list, beams corresponding to TCI-states after the initial TCI-state are beams that are to sequentially provide a service for the terminal device. The terminal device accesses a beam corresponding to the initial TCI-state.

According to a second aspect, a beam management method is provided. The method may be applied to an NTN scenario, for example, a satellite communication system. The method may be performed by a network device, or may be performed by a component of the network device, for example, a processor, a chip, or a chip system of the network device. In this application, an example in which the method is performed by the network device is used for description.

The method includes: A network device determines a first transmission configuration indicator state TCI-state and a first transmission configuration indicator list. In the first transmission configuration indicator list, beams corresponding to TCI-states after the first TCI-state are beams that are to sequentially provide a service for a terminal device. First indication information is sent to the terminal device when the first transmission configuration indicator list is the same as a second transmission configuration indicator list. The first indication information indicates the terminal device to perform beam switching according to an arrangement order of TCI-states in the second transmission configuration indicator list. The second transmission configuration indicator list is a transmission configuration indicator list determined by the network device last time. Second indication information is sent to the terminal device when the first transmission configuration indicator list is different from the second transmission configuration indicator list. The second indication information indicates the first TCI-state and the first transmission configuration indicator list.

Based on this solution, one or more beams that are to sequentially provide a service for the terminal device are configured based on a transmission configuration indicator list. An updated first transmission configuration indicator list and a first TCI-state are indicated to the terminal device when the transmission configuration indicator list changes, so that the terminal device performs beam switching according to the first transmission configuration indicator list and the first TCI-state. The terminal device is indicated to perform beam switching according to the arrangement order of the TCI-states in the original second transmission configuration indicator list when the transmission configuration indicator list does not change, so as to implement beam management. In addition, the transmission configuration indicator list may configure a plurality of TCI-states for the terminal device, so that the transmission configuration indicator list is applicable to large-scale beam configuration in an NTN scenario. Moreover, the network device does not need to send the TCI-state each time when the terminal device performs beam switching to indicate a to-be-switched beam, so that signaling overheads can be reduced and beam switching efficiency can be improved.

In some possible designs, before the network device sends the first indication information or the second indication information to the terminal device, the beam management method further includes: sending one or more transmission configuration indicator lists. The one or more transmission configuration indicator lists include the first transmission configuration indicator list and/or the second transmission configuration indicator list. Based on this solution, the network device sends the one or more transmission configuration indicator lists, so as to subsequently indicate the terminal device to perform beam switching according to the first transmission configuration indicator list or the second transmission configuration indicator list in the one or more transmission configuration indicator lists.

In some possible designs, that the network device determines the first TCI-state and the first transmission configuration indicator list includes: The network device determines the first TCI-state and the first transmission configuration indicator list based on a location of the terminal device.

In some possible designs, the beam management method further includes: The network device sends request information to the terminal device through a message 2 in a random access process. The request information is for requesting a location of the terminal device. The network device further receives location information from the terminal device through a message 3 in the random access process. The location information indicates the location of the terminal device. Based on this solution, the location of the terminal device may be acquired in the random access process, and it is unnecessary to send a message to request the terminal device to report its location after the terminal device accesses the network device, so that signaling overheads can be reduced and the location of the terminal device can be acquired quickly.

In some possible designs, before the network device determines the first TCI-state and the first transmission configuration indicator list, the beam management method further includes: The network device determines an initial TCI-state and an initial transmission configuration indicator list. The initial transmission configuration indicator list includes a plurality of TCI-states including the initial TCI-state. In the initial transmission configuration indicator list, beams corresponding to TCI-states after the initial TCI-state are beams that are to sequentially provide a service for the terminal device. The network device sends third indication information to the terminal device. The third indication information indicates an initial TCI-state and an initial transmission configuration indicator list.

With reference to the foregoing first aspect and second aspect, in some possible designs, each of the foregoing one or more transmission configuration indicator lists includes a plurality of TCI-states. TCI-states included in different transmission configuration indicator lists are not completely the same, and a plurality of beams corresponding to a plurality of TCI-states included in a same transmission configuration indicator list are arranged according to a movement direction of the network device.

With reference to the foregoing first aspect and second aspect, in some possible designs, the one or more transmission configuration indicator lists are included in system information, or included in radio resource control RRC signaling. Based on this solution, when the one or more transmission configuration indicator lists are sent in the system information, the network device does not need to separately send the one or more transmission configuration indicator lists to each terminal device through dedicated signaling of the terminal device, so that signaling overheads can be reduced. When the one or more transmission configuration indicator lists are sent in the RRC signaling, the network device may configure different transmission configuration indicator lists for different terminal devices, so that configuration flexibility can be improved.

With reference to the foregoing first aspect and second aspect, in some possible designs, the foregoing first indication information or second indication information is included in any one of the following: downlink control information DCI, a media access control control element MAC CE, and radio resource control RRC signaling.

According to a third aspect, a location acquisition method is provided. The method may be applied to an NTN scenario, for example, a satellite communication system. The method may be performed by a terminal device, or may be performed by a component of the terminal device, for example, a processor, a circuit, a chip, or a chip system of the terminal device. In this application, an example in which the method is performed by the terminal device is used for description. The method includes: A terminal device receives request information from a network device through a message 2 in a random access process. The request information is for requesting a location of the terminal device. The terminal device sends location information to the network device through a message 3 in the random access process. The location information indicates the location of the terminal device. Based on this solution, the location of the terminal device may be acquired in the random access process, and it is unnecessary to send a message to request the terminal device to report its location after the terminal device accesses the network device, so that signaling overheads can be reduced and the location of the terminal device can be acquired quickly.

According to a fourth aspect, a location acquisition method is provided. The method may be applied to an NTN scenario, for example, a satellite communication system. The method may be performed by a network device, or may be performed by a component of the network device, for example, a processor, a chip, or a chip system of the network device. In this application, an example in which the method is performed by the network device is used for description. The method includes: A network device sends request information to a terminal device through a message 2 in a random access process. The request information is for requesting a location of the terminal device. The network device receives location information from the terminal device through a message 3 in the random access process. The location information indicates the location of the terminal device. Technical effects brought by the fourth aspect may refer to technical effects brought by the third aspect. Details are not described herein again.

According to a fifth aspect, a communication apparatus is provided to implement the foregoing methods. The communication apparatus may be the terminal device in the first aspect or the third aspect, or an apparatus including the terminal device, or an apparatus included in the terminal device, for example, a chip; or the communication apparatus may be the network device in the second aspect or the fourth aspect, or an apparatus including the network device, or an apparatus included in the network device. The communication apparatus includes a corresponding module, unit, or means (means) for implementing the foregoing methods. The module, unit, or means may be implemented by hardware, software, or hardware executing corresponding software. The hardware or the software includes one or more modules or units corresponding to the foregoing functions.

According to a sixth aspect, a communication apparatus is provided, including a processor and a memory. The memory is configured to store computer instructions. When the processor executes the instructions, the communication apparatus is enabled to perform the method according to any one of the foregoing aspects. The communication apparatus may be the terminal device in the first aspect or the third aspect, or an apparatus including the terminal device, or an apparatus included in the terminal device, for example, a chip; or the communication apparatus may be the network device in the second aspect or the fourth aspect, or an apparatus including the network device, or an apparatus included in the network device.

According to a seventh aspect, a communication apparatus is provided, including an interface circuit and a logic circuit. The interface circuit may be a code/data read/write interface circuit. The interface circuit is configured to acquire input information and/or output output information. The logic circuit is configured to perform the method according to any one of the foregoing aspects, and perform processing and/or generate the output information based on the input information. The communication apparatus may be the terminal device in the first aspect or the third aspect, or an apparatus including the terminal device, or an apparatus included in the terminal device, for example, a chip; or the communication apparatus may be the network device in the second aspect or the fourth aspect, or an apparatus including the network device, or an apparatus included in the network device.

According to an eighth aspect, a communication apparatus is provided, including at least one processor. The processor is configured to execute a computer program or instructions stored in a memory, so that the communication apparatus performs the method according to any one of the foregoing aspects. The memory may be coupled to the processor, or may be independent of the processor. The communication apparatus may be the terminal device in the first aspect or the third aspect, or an apparatus including the terminal device, or an apparatus included in the terminal device, for example, a chip; or the communication apparatus may be the network device in the second aspect or the fourth aspect, or an apparatus including the network device, or an apparatus included in the network device.

According to a ninth aspect, a computer-readable storage medium is provided. The computer-readable storage medium stores instructions. When the instructions are run on a communication apparatus, the communication apparatus is enabled to perform the method according to any one of the foregoing aspects. The communication apparatus may be the terminal device in the first aspect or the third aspect, or an apparatus including the terminal device, or an apparatus included in the terminal device, for example, a chip; or the communication apparatus may be the network device in the second aspect or the fourth aspect, or an apparatus including the network device, or an apparatus included in the network device.

According to a tenth aspect, a computer program product including instructions is provided. When the computer program product runs on a communication apparatus, the communication apparatus is enabled to perform the method according to any one of the foregoing aspects. The communication apparatus may be the terminal device in the first aspect or the third aspect, or an apparatus including the terminal device, or an apparatus included in the terminal device, for example, a chip; or the communication apparatus may be the network device in the second aspect or the fourth aspect, or an apparatus including the network device, or an apparatus included in the network device.

According to an eleventh aspect, a communication apparatus (for example, the communication apparatus may be a chip or a chip system) is provided. The communication apparatus includes a processor, configured to implement a function involved in any one of the foregoing aspects. In a possible design, the communication apparatus further includes a memory. The memory is configured to store a necessary program instruction and data. When the communication apparatus is the chip system, the communication apparatus may include a chip, or may include a chip and another discrete device.

Technical effects brought by any one of design manners in the fifth aspect to the eleventh aspect may refer to technical effects brought by different design manners in the first aspect, the second aspect, the third aspect, or the fourth aspect. Details are not described herein again.

According to a twelfth aspect, a communication system is provided. The communication system includes the terminal device according to the foregoing aspects and the network device according to the foregoing aspects.

### BRIEF DESCRIPTION OF DRAWINGS

FIG. 1 is a schematic diagram of a structure of a communication system according to an embodiment of this application;
FIG. 2 is a schematic diagram of a structure of a terminal device and a network device according to an embodiment of this application;
FIG. 3 is a schematic diagram of a structure of another terminal device according to an embodiment of this application;
FIG. 4 is a schematic flowchart of a beam management method according to an embodiment of this application;
FIG. 5 is a schematic diagram of beam distribution according to an embodiment of this application;
FIG. 6 is a schematic diagram of beam grouping according to an embodiment of this application;
FIG. 7a is a schematic flowchart of another beam management method according to an embodiment of this application;
FIG. 7b is a schematic flowchart of still another beam management method according to an embodiment of this application;
FIG. 8 is a schematic diagram of a structure of still another terminal device according to an embodiment of this application; and
FIG. 9 is a schematic diagram of a structure of another network device according to an embodiment of this application.

### DESCRIPTION OF EMBODIMENTS

For ease of understanding of the technical solutions in embodiments of this application, the technologies related to this application are first briefly described as follows.

### 1. Antenna port:

An antenna port is a logical concept. One antenna port may correspond to one physical transmit antenna, or may correspond to a plurality of physical transmit antennas. In both the cases, a receiver (receiver) of a terminal does not decompose a signal from a same antenna port. This is because from a perspective of the terminal, regardless of whether a channel is formed by a single physical transmit antenna or is combined by a plurality of physical transmit antennas, the antenna port is defined by a reference signal (reference signal, RS) corresponding to the antenna port. For example, an antenna port corresponding to a de-modulation reference signal (de-modulation reference signal, DMRS) is a DMRS port, and the terminal may obtain a channel estimation of the antenna port according to the reference signal. Each antenna port corresponds to one time/frequency resource grid (time/frequency resource grid), and has its own reference signal. One antenna port is one channel, and the terminal may perform channel estimation and data demodulation according to the reference signal corresponding to the antenna port.

### 2. Beam:

The beam is a communication resource. The beam may be a wide beam, a narrow beam, or a beam of another type. A technology for forming the beam may be a beamforming technology or another technical means. The beamforming technology may be specifically a digital beamforming technology, an analog beamforming technology, or a hybrid digital/analog beamforming technology. Different beams may be considered as different resources. Same information or different information may be sent by using the different beams.

Optionally, a plurality of beams having a same communication feature or similar communication features may be considered as one beam. One beam may be formed by one or more antenna ports, and is for transmitting a data channel, a control channel, a sounding signal, and the like. The one or more antenna ports forming the beam may be considered as one antenna port set.

Beams include a transmit beam and a receive beam. The transmit beam may refer to distribution of signal strength formed in different directions in space after a signal is transmitted through an antenna, and the receive beam may refer to distribution in which an antenna array enhances or weakens reception of a radio signal in different directions in space.

In a current NR protocol, beam information may be indicated through a quasi colocation (quasi colocation, QCL) relationship between antenna ports. Specifically, that one resource (or antenna port) and another resource (or antenna port) have a quasi colocation relationship may be indicated in indication information (for example, downlink control information (downlink control information, DCI)) to indicate that beams corresponding to the two resources (or antenna ports) have one or more same or similar spatial characteristics (or parameters), and the two resources may be received by using a same receive beam.

In the protocol, the beam may be specifically represented by identifiers of various signals, for example, a resource index of a channel state information reference signal (channel state information reference signal, CSI-RS), an index of a synchronization signal broadcast channel block (synchronous signal/physical broadcast channel block, SSB), a resource index of a sounding reference signal (sounding reference signal, SRS), and a resource index of a tracking reference signal (tracking reference signal, TRS).

In addition, generally, one beam corresponds to one DMRS port, one transmission configuration indicator (transmission configuration indicator, TCI), or one sounding reference signal resource indicator (SRS resource indicator, SRI) (used for uplink data transmission). Therefore, different beams may also be represented by different DMRS ports, TCIs, or SRIs.

### 3. QCL:

The QCL relationship indicates that beams (or resources) corresponding to a plurality of antenna ports have one or more same or similar communication characteristics. For a plurality of resources having a QCL relationship, a same or similar communication configuration may be used.

Specifically, antenna ports having a QCL relationship have a same parameter, or a parameter (which may also be referred to as a QCL parameter) of one antenna port may be used for determining a parameter of another antenna port having a QCL relationship with the antenna port, or two antenna ports have a same parameter, or a parameter difference between two antenna ports is less than a threshold. The parameter may include one or more of the following: a delay spread (delay spread), a Doppler spread (Doppler spread), a Doppler shift (Doppler shift), an average delay (average delay), an average gain, and a spatial receive parameter (spatial Rx parameters). The spatial receive parameter may include one or more of the following: an angle of arrival (angle of arrival, AOA), an average AOA, an AOA spread, an angle of departure (angle of departure, AOD), an average AOD, an AOD spread, a receive antenna spatial correlation parameter, a transmit antenna spatial correlation parameter, a transmit beam, a receive beam, and a resource identifier

### 4. TCI:

The TCI may be used for indicating QCL information of a physical downlink control channel (physical downlink control channel, PDCCH)/physical downlink shared channel (physical downlink shared channel, PDSCH). Specifically, a maximum of M reference signals with TCI-state indicators satisfying the QCL relationship with a DMRS of the PDCCH/PDSCH may be configured by a higher layer signaling parameter PDSCH-config, and a value of M depends on a capability of the terminal. Each TCI-state defines one or more reference signals that satisfy a QCL relationship with the DMRS of the PDSCH.

In the TCI-state, a reference signal that satisfies the QCL relationship with the DMRS of the PDCCH/PDSCH may be specifically indicated by a reference signal index.

### 5. Non-terrestrial network (non-terrestrial network, NTN):

The NTN communication may include satellite communication, and may mean that a base station or some base station functions are deployed on a satellite to provide coverage for a terminal device. The satellite communication has prominent advantages such as global coverage, long-distance transmission, flexible networking, convenient deployment, and being not restricted by geographical locations, and has been widely applied to a plurality of fields such as maritime communication, positioning and navigation, disaster relief, scientific experiments, video broadcasting, and earth observation.

Based on a satellite altitude, namely, a satellite orbit altitude, a satellite system may be classified into a highly elliptical orbiting (highly elliptical orbiting, HEO) satellite, a high-earth orbit (geostationary earth orbit, GEO) satellite, a medium earth orbit (medium earth orbit, MEO) satellite, and a low-earth orbit (low-earth orbit, LEO) satellite. The GEO satellite is also referred to as a stationary satellite, and a moving speed of the GEO satellite is the same as a rotation speed of the earth. Therefore, the GEO satellite remains stationary relative to the ground. Accordingly, a cell of the GEO satellite is also stationary. Coverage of the cell of the GEO satellite is large, and a diameter of the cell is usually 500 kilometers (kilometre, Km). The LEO satellite moves fast relative to the ground at a speed of about 7 km per second. Therefore, service coverage provided by the LEO satellite also moves therewith. Usually, a higher orbit of a satellite indicates larger coverage of the satellite but a longer communication delay.

In addition, the NTN communication may further include high altitude platform station (high altitude platform station, HAPS) communication, and means that a base station or some base station functions are deployed on a high altitude platform station to provide coverage for a terminal device.

Currently, a network device usually configures TCIs for each terminal device by taking a terminal device as a granularity. In a subsequent communication process, when a quantity of TCIs configured by the network device for the terminal device is greater than 8, the network device first sends a media access control control element (media access control control element, MAC CE) to activate a maximum of 8 TCIs, and then indicates, through a "TCI-PresentInDCI" field (or an information element) in DCI, a finally used TCI in a plurality of activated TCIs. The terminal device may determine, according to the finally used TCI, a beam for receiving a PDSCH. When a quantity of TCIs configured by the network device for the terminal device is less than or equal to 8, the network device directly indicates a used TCI through a "TCI-PresentInDCI" field in the DCI. The terminal device may determine, according to the finally used TCI, a beam for receiving a PDSCH. Alternatively, when the DCI does not carry the "TCI-PresentInDCI" field, the terminal device assumes that the PDSCH and the PDCCH satisfy a QCL relationship. In this case, the beam for receiving the PDSCH may be determined according to the beam for receiving a PDCCH.

In the foregoing solution, each time beam switching is performed, the network device needs to issue a MAC CE or DCI to the terminal device, and carry a TCI-PresentInDCI field in the DCI to indicate the TCI. However, in the NTN scenario, a beam scale is relatively large, and beam switching is frequent. Therefore, the foregoing method is no longer applicable. Based on this, this application provides a beam management method to implement beam management in an NTN scenario.

Technical solutions in embodiments of this application will be described with reference to the accompanying drawings in the embodiments of this application. In the descriptions of this application, unless otherwise specified, "/" indicates an "or" relationship between correlated objects. For example, A/B may indicate A or B. In this application, "and/or" describes only an association relationship between associated objects and indicates that three relationships may exist. For example, A and/or B may indicate the following three cases: Only A exists, both A and B exist, and only B exists, where A or B may be singular or plural. In addition, in the descriptions of this application, unless otherwise specified, "at least one" means one or more, and "a plurality of" means two or more. At least one of the following items (pieces) or a similar expression thereof refers to any combination of these items, including any combination of singular items (pieces) or plural items (pieces). For example, at least one item (piece) of a, b, or c may indicate a, b, c, a-b, a-c, b-c, or a-b-c, where "-" indicates that associated objects are in an "and" relationship, and a, b, and c may be singular or plural.

In addition, to clearly describe the technical solutions in embodiments of this application, words such as "first" and "second" are used in embodiments of this application to distinguish between same items or similar items that have basically the same functions or purposes. A person skilled in the art may understand that the terms such as "first" and "second" do not limit a quantity or an execution sequence, and the terms such as "first" and "second" do not indicate a definite difference.

The technical solutions in embodiments of this application may be applied to various communication systems. For example, orthogonal frequency-division multiple access (orthogonal frequency-division multiple access, OFDMA), single carrier frequency-division multiple access (single carrier FDMA, SC-FDMA), a satellite communication system, an NTN system, an internet of things (internet of things, loT) system, or a future evolved communication system. Terms "system" and "network" may be interchanged with each other. In addition, the communication systems may be further applied to a future-oriented communication technology, and are all applicable to the technical solutions provided in embodiments of this application.

The foregoing communication systems applicable to this application are merely examples for description, and the communication systems applicable to this application are not limited thereto. A unified description is provided herein and details are not described below again.

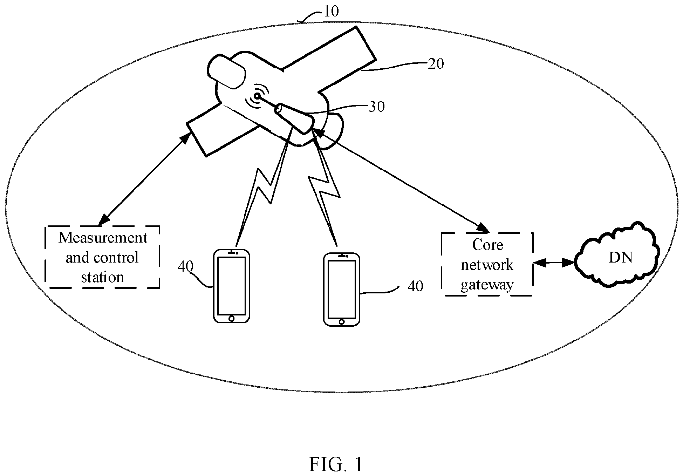

FIG. 1 shows a communication system 10 according to this application. The communication system 10 includes a network device 30 and one or more terminal devices 40 connected to the network device 30. Optionally, different terminal devices 40 may communicate with each other.

For example, taking that the network device 30 shown in FIG. 1 communicates with any terminal device 40 as an example, in this application, the network device determines a first transmission configuration indicator state TCI-state and a first transmission configuration indicator list. The first transmission configuration indicator list includes a plurality of TCI-states including the first TCI-state. In the first transmission configuration indicator list, beams corresponding to TCI-states after the first TCI-state are beams that are to sequentially provide a service for the terminal device. When the first transmission configuration indicator list is the same as a second transmission configuration indicator list, the network device sends first indication information to the terminal device. The first indication information indicates the terminal device to perform beam switching according to an arrangement order of TCI-states in the second transmission configuration indicator list. Correspondingly, after receiving the first indication information, the terminal device performs beam switching according to the arrangement order of the TCI-states in the second transmission configuration indicator list. The second transmission configuration indicator list is a transmission configuration indicator list determined by the network device last time. When the first transmission configuration indicator list is different from a second transmission configuration indicator list, the network device sends second indication information to the terminal device. The second indication information indicates the first TCI-state and the first transmission configuration indicator list. Correspondingly, after receiving the second indication information, the terminal device performs beam switching according to the first transmission configuration indicator list and the first TCI-state.

Based on this solution, in this application, one or more beams that are to sequentially provide a service for the terminal device are configured based on a transmission configuration indicator list. An updated first transmission configuration indicator list and a first TCI-state are indicated to the terminal device when the transmission configuration indicator list changes, so that the terminal device performs beam switching according to the first transmission configuration indicator list and the first TCI-state. The terminal device is indicated to perform beam switching according to the arrangement order of the TCI-states in the original second transmission configuration indicator list when the transmission configuration indicator list does not change, so as to implement beam management. In addition, the transmission configuration indicator list may configure a plurality of TCI-states for the terminal device, so that the transmission configuration indicator list is applicable to large-scale beam configuration in an NTN scenario. Moreover, the network device does not need to send the TCI-state each time when the terminal device performs beam switching to indicate a to-be-switched beam, so that signaling overheads can be reduced and beam switching efficiency can be improved.

Optionally, the network device 30 in embodiments of this application may be deployed on a high altitude platform station or a satellite 20. Optionally, the communication system 10 may further include a measurement and control station and a core network gateway. The network device 30 may be connected to the core network gateway, and complete data exchange with a terrestrial data network (data network, DN) through the core network gateway. The measurement and control station is configured to complete measurement, telemetering, and the like for the high altitude platform station or the satellite 20, for example, control a flight attitude of the high altitude platform station or the satellite 20, control on and off of a load device, and the like.

Optionally, the network device 30 in embodiments of this application is a device that enables the terminal device 40 to access a wireless network. The network device 30 may be a node in a radio access network, or may be referred to as a base station, or may also be referred to as a radio access network (radio access network, RAN) node (or device). For example, the network device may include an evolved base station (NodeB, eNB, or e-NodeB, evolved NodeB) in a long term evolution (long term evolution, LTE) system or an LTE-Advanced (LTE-Advanced, LTE-A) system, for example, a conventional macro base station eNB and a micro base station eNB in a heterogeneous network scenario, or may include a next generation nodeB (next generation nodeB, gNB) in a 5G new radio (new radio, NR) system, or may further include a transmission reception point (transmission reception point, TRP), a home base station (for example, a home evolved NodeB, or a home NodeB, HNB), a base band unit (base band unit, BBU), a base band unit BBU pool, a WiFi access point (access point, AP), or the like, or may further include a centralized unit (centralized unit, CU) and a distributed unit (distributed unit, DU) in a cloud radio access network (cloud radio access network, CloudRAN) system, or may include a base station in a non-terrestrial network (non-terrestrial network, NTN), that is, may be deployed on a high altitude platform station or a satellite. In an NTN, a network device may be used as a layer 1 (L 1) relay (relay), or may be used as a base station, or may be used as a DU, or may be used as an integrated access and backhaul (integrated access and backhaul, IAB) node. Alternatively, the network device may be a device that implements a base station function in the IoT, for example, a device that implements a base station function in vehicle-to-everything (vehicle-to-everything, V2X), device to device (device to device, D2D), or machine to machine (machine to machine, M2M). This is not limited in embodiments of this application.

Optionally, the base station in embodiments of this application may include various forms of base stations, for example, a macro base station, a micro base station (also referred to as a small cell), a relay station, an access point, a next-generation NodeB (gNodeB, gNB), a home base station (for example, a home evolved NodeB or a home NodeB, HNB), a baseBand unit (baseBand unit, BBU), a transmitting and receiving point (transmitting and receiving point, TRP), a transmitting point (transmitting point, TP), and a mobile switching center. This is not specifically limited in embodiments of this application.

Optionally, the terminal device 40 in embodiments of this application may be a device, such as a terminal or a chip that can be used in the terminal, configured to implement a wireless communication function. The terminal may be user equipment (user equipment, UE), an access terminal, a terminal unit, a terminal station, a mobile station, a mobile platform, a remote station, a remote terminal, a mobile device, a wireless communication device, a terminal agent, a terminal apparatus, or the like in a 5G network or a future evolved PLMN. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device or computing device having a wireless communication function, another processing device, vehicle-mounted device, or wearable device connected to a wireless modem, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. Alternatively, the terminal may be a terminal having a communication function in the IoT, for example, a terminal in V2X (for example, an Internet of Vehicles device), a terminal in D2D communication, or a terminal in M2M communication. The terminal may be mobile or at a fixed location.

Optionally, the network device 30 and the terminal device 40 in embodiments of this application may also be referred to as communication apparatuses, and each may be a general-purpose device or a dedicated device. This is not specifically limited in embodiments of this application.

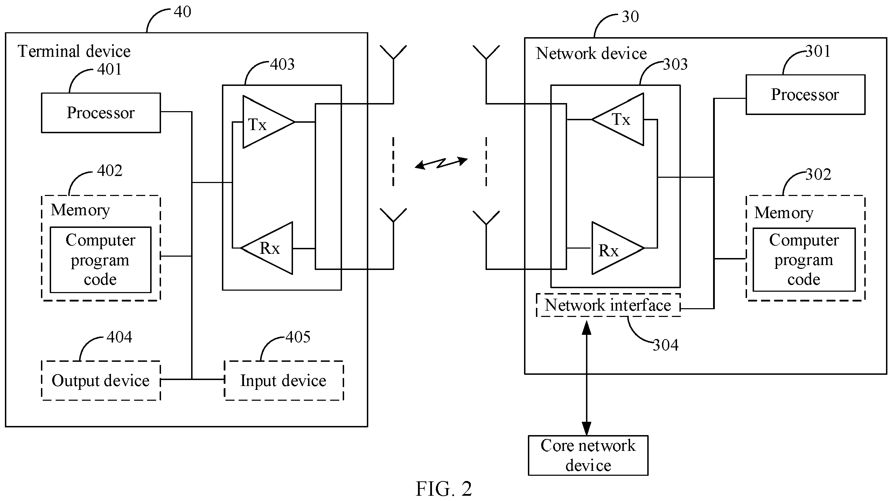

Optionally, FIG. 2 is a schematic diagram of a structure of the network device 30 and the terminal device 40 according to an embodiment of this application.

The terminal device 40 includes at least one processor (an example in which one processor 401 is included is used for description in FIG. 2) and at least one transceiver (an example in which one transceiver 403 is included is used for description in FIG. 2). Optionally, the terminal device 40 may further include at least one memory (an example in which one memory 402 is included is used for description in FIG. 2), at least one output device (an example in which one output device 404 is included is used for description in FIG. 2), and at least one input device (an example in which one input device 405 is included is used for description in FIG. 2).

The processor 401, the memory 402, and the transceiver 403 are connected to each other through communication lines. The communication lines may include a path for transmitting information among the foregoing components.

The processor 401 may be a general-purpose central processing unit (central processing unit, CPU), a microprocessor, an application-specific integrated circuit (application-specific integrated circuit, ASIC), or one or more integrated circuits configured to control program execution of the solutions in this application. During specific implementation, in an embodiment, the processor 401 may alternatively include a plurality of CPUs, and the processor 401 may be a single-core (single-CPU) processor or a multi-core (multi-CPU) processor. The processor here may refer to one or more devices, circuits, or processing cores configured to process data (for example, computer program instructions).

The memory 402 may be an apparatus having a storage function. For example, the memory 402 may be a read-only memory (read-only memory, ROM), or another type of static storage device that can store static information and instructions, or a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a disk storage medium or another magnetic storage device, or any other medium that can be configured to carry or store expected program code in a form of instructions or a data structure and that can be accessed by a computer. However, the memory 402 is not limited thereto. The memory 402 may exist independently, and is connected to the processor 401 through a communication line. The memory 402 may alternatively be integrated with the processor 401.

The memory 402 is configured to store computer-executable instructions for performing the solutions in this application, and the execution of the computer-executable instructions is controlled by the processor 401. Specifically, the processor 401 is configured to execute the computer-executable instruction stored in the memory 402, so as to implement the beam management method in embodiments of this application.

Optionally, the computer-executable instructions in embodiments of this application may also be referred to as application program code or computer program code. This is not specifically limited in embodiments of this application.

The transceiver 403 may use any apparatus such as a transceiver, and is configured to communicate with another device or a communication network, for example, the Ethernet, a RAN, or a wireless local area network (wireless local area network, WLAN). The transceiver 403 includes a transmitter (transmitter, Tx) and a receiver (receiver, Rx).

The output device 404 communicates with the processor 401, and may display information in a plurality of manners. For example, the output device 404 may be a liquid crystal display (liquid crystal display, LCD), a light emitting diode (light emitting diode, LED) display device, a cathode ray tube (cathode ray tube, CRT) display device, a projector (projector), or the like.

The input device 405 communicates with the processor 401, and may receive an input of a user in a plurality of manners. For example, the input device 405 may be a mouse, a keyboard, a touchscreen device, a sensor device, or the like.

The network device 30 includes at least one processor (an example in which one processor 301 is included is used for description in FIG. 2) and at least one transceiver (an example in which one transceiver 303 is included is used for description in FIG. 2). Optionally, the network device 30 may further include at least one memory (an example in which one memory 302 is included is used for description in FIG. 2) and at least one network interface (an example in which one network interface 304 is included is used for description in FIG. 2). The processor 301, the memory 302, the transceiver 303, and the network interface 304 are connected through communication lines. The network interface 304 is configured to connect to a core network device through a link (for example, an S1 interface), or connect to a network interface of another network device through a wired or wireless link (for example, an X2 interface) (not shown in FIG. 2). This is not specifically limited in embodiments of this application. In addition, descriptions about the processor 301, the memory 302, and the transceiver 303 may refer to descriptions about the processor 401, the memory 402, and the transceiver 403 in the terminal device 40. Details are not described herein again.

It may be understood that the structure shown in FIG. 2 does not constitute a specific limitation on the network device 30 or the terminal device 40. For example, in some other embodiments of this application, the network device 30 or the terminal device 40 may include more or fewer components than those shown in FIG. 2, or combine some components, or split some components, or have different component arrangements. The components shown in the figure may be implemented by using hardware, software, or a combination of software and hardware.

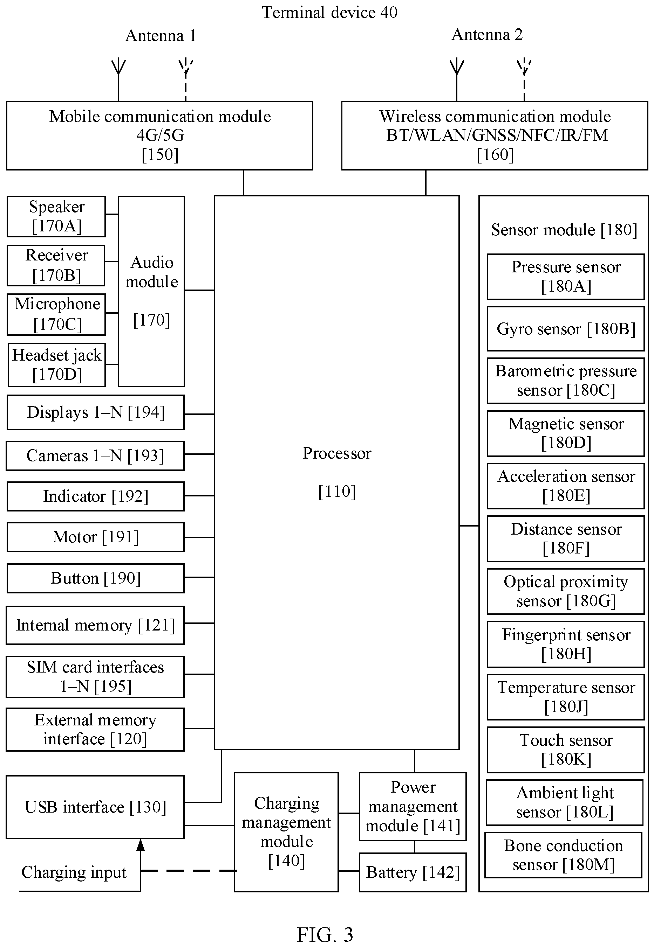

With reference to the schematic diagram of the structure of the terminal device 40 shown in FIG. 2, for example, FIG. 3 is a specific structural form of the terminal device 40 according to an embodiment of this application.

In some embodiments, a function of the processor 401 in FIG. 2 may be implemented by a processor 110 in FIG. 3.

In some embodiments, a function of the transceiver 403 in FIG. 2 may be implemented through an antenna 1, an antenna 2, a mobile communication module 150, a wireless communication module 160, or the like in FIG. 3.

The antenna 1 and the antenna 2 are configured to transmit and receive electromagnetic wave signals. Each antenna in the terminal device 40 may be configured to cover one or more communication frequency bands. Different antennas may be further multiplexed, so as to improve antenna utilization. For example, the antenna 1 may be multiplexed as a diversity antenna in a wireless local area network. In some other embodiments, an antenna may be used in combination with a tuning switch.

The mobile communication module 150 may provide a solution of wireless communication that is applied to the terminal device 40 and that includes 4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to a modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The wireless communication module 160 may provide a solution used for wireless communication including a wireless local area network (wireless local area network, WLAN) (for example, a Wi-Fi network), blue tooth (blue tooth, BT), a global navigational satellite system (global navigation satellite system, GNSS), frequency modulation (frequency modulation, FM), near field communication (near field communication, NFC), an infrared (infrared, IR) technology, and the like on the terminal device 40. The wireless communication module 160 may be one or more components integrating at least one communication processing module. The wireless communication module 160 receives an electromagnetic wave through the antenna 2, performs processing of frequency modulation and filtering on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 of the terminal device 40 is coupled to the mobile communication module 150, and the antenna 2 is coupled to the wireless communication module 160, so that the terminal device 40 can communicate with a network and another device through a wireless communication technology. The wireless communication technology may include an LTE technology, a BT technology, a GNSS technology, a WLAN technology, an NFC technology, an FM technology, an IR technology, or the like.

In some embodiments, a function of the memory 402 in FIG. 2 may be implemented by an internal memory 121 in FIG. 3, an external memory (for example, a Micro SD card) connected to an external memory interface 120, or the like.

In some embodiments, a function of the output device 404 in FIG. 2 may be implemented by a display 194 in FIG. 3. The display 194 is configured to display an image, a video, and the like. The display 194 includes a display panel.

In some embodiments, a function of the input device 405 in FIG. 2 may be implemented by a mouse, a keyboard, a touchscreen device, or a sensor module 180 in FIG. 3. For example, as shown in FIG. 3, the sensor module 180 may include one or more of a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, and a bone conduction sensor 180M. This is not specifically limited in embodiments of this application.

In some embodiments, as shown in FIG. 3, the terminal device 40 may further include one or more of an audio module 170, a camera 193, an indicator 192, a motor 191, a button 190, a SIM card interface 195, a USB interface 130, a charging management module 140, a power management module 141, and a battery 142. The audio module 170 may be connected to a speaker 170A (also referred to as a "loudspeaker"), a receiver 170B (also referred to as a "handset"), a microphone 170C (also referred to as a "mic" or "mike"), a headset jack 170D, or the like. This is not specifically limited in embodiments of this application.

It may be understood that the structure shown in FIG. 3 does not constitute a specific limitation on the terminal device 40. For example, in some other embodiments of this application, the terminal device 40 may include more or fewer components than those shown in the figure, or combine some components, or split some components, or have different component arrangements. The components shown in the figure may be implemented by using hardware, software, or a combination of software and hardware.

The beam management method according to embodiments of this application is described in detail with reference to the accompanying drawings by taking an example in which the network device 30 shown in FIG. 1 interacts with any terminal device 40.

It should be noted that names of messages between network elements, names of parameters in the messages, or the like in the following embodiments of this application are merely examples, and there may be other names during specific implementation. This is not specifically limited in embodiments of this application.

It may be understood that, in embodiments of this application, the terminal device and/or the network device may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be necessarily to be performed.

This application provides a beam management method. The beam management method may be applied to an NTN scenario. Certainly, the method may be further applied to another scenario, for example, a scenario in which a network device is movable and moves at a relatively high speed. An application scenario of the method is not specifically limited in this application, and the foregoing example scenario does not constitute any limitation on the method.

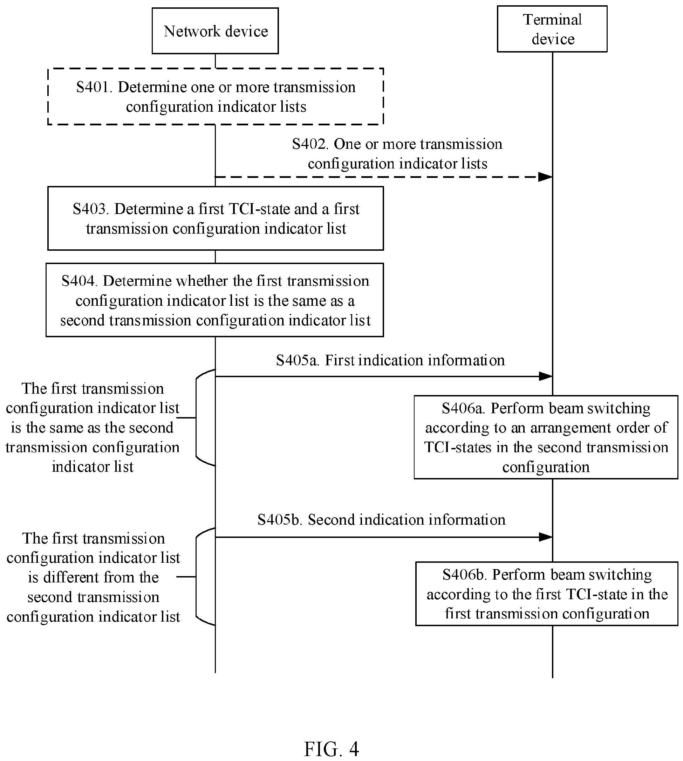

FIG. 4 shows a beam management method according to this application. The beam management method includes the following steps.

S401. A network device determines one or more transmission configuration indicator lists (TCI List).

Optionally, the network device may divide TCI-states respectively corresponding to a plurality of beams into one or more transmission configuration indicator lists. It may be understood that the beams are in a one-to-one correspondence with the TCI-states, that is, one beam corresponds to one TCI-state, and different beams correspond to different TCI-states.

Optionally, each of the one or more transmission configuration indicator lists includes a plurality of TCI-states. TCI-states included in different transmission configuration indicator lists are not completely the same, and a plurality of beams corresponding to a plurality of TCI-states included in a same transmission configuration indicator list are sequentially arranged. A same TCI-state may be included in different transmission configuration indicator lists.

It should be noted that quantities of TCI-states included in different transmission configuration indicator lists may be the same or may be different. This is not specifically limited in this application.

For example, that the network device determines n+1 transmission configuration indicator lists is used as an example. The n+1 transmission configuration indicator lists may be shown in Table 1.

**Table 1**

| | | | | |
|---|---|---|---|---|
| TCI List 0 | TCI List 1 | TCI List 2 | ··· | TCI List n |
| TCI-state ID 00 | TCI-state ID 10 | TCI-state ID 20 | ··· | TCI-state ID n0 |
| TCI-state ID 01 | TCI-state ID 11 | TCI-state ID 21 | ··· | TCI-state ID n1 |
| ⋮ | ⋮ | ⋮ | ⋮ | ⋮ |
| TCI-state ID 0x | TCI-state ID 1x | TCI-state ID 2x | ··· | TCI-state ID nx |

ID is an identifier (identifier, ID). A TCI list ID is for identifying a transmission configuration indicator list. The TCI-state ID is for identifying a TCI-state. A beam corresponding to the TCI-state may be identified by using a beam ID. In this application, an example in which a beam ID and a TCI-state ID of a same beam are the same is used for description. Different TCI list IDs identify different transmission configuration indicator lists, and similarly, different TCI-state IDs identify different TCI-states.

Optionally, in a case that a moving track of the network device is predictable, an arrangement order of a plurality of beams corresponding to TCI-states included in a same transmission configuration indicator list may be determined according to a movement direction of the network device. For example, the plurality of beams corresponding to the plurality of TCI-states are arranged according to the movement direction of the network device, or the plurality of beams corresponding to the plurality of TCI-states are arranged in the movement direction of the network device.

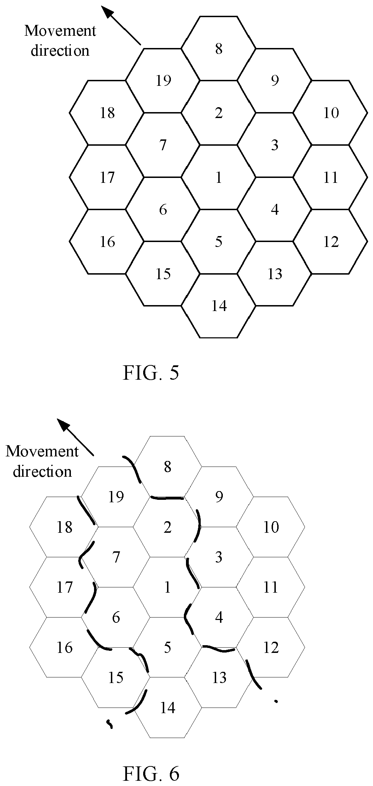

For example, it is assumed that beam distribution of the network device is shown in FIG. 5. Each hexagon represents one beam of the network device, each beam corresponds to one TCI-state, a number in the hexagon represents a TCI-state ID, and a movement direction of the network device is shown by a black arrow in FIG. 5. In this case, a plurality of TCI-states in the transmission configuration indicator list may be arranged according to the movement direction of the network device.

For example, based on the example shown in FIG. 5, the one or more transmission configuration indicator lists determined by the network device may be shown in Table 2.

**Table 2**

| | | | | |
|---|---|---|---|---|
| TCI List 0 | TCI List 1 | TCI List 2 | TCI List 3 | TCI List 4 |
| TCI-state 18 | TCI-state 19 | TCI-state 19 | TCI-state 8 | TCI-state 8 |
| TCI-state 17 | TCI-state 7 | TCI-state 2 | TCI-state 9 | TCI-state 9 |
| TCI-state 16 | TCI-state 6 | TCI-state 1 | TCI-state 3 | TCI-state 10 |
| TCI-state 15 | TCI-state 5 | TCI-state 5 | TCI-state 4 | TCI-state 11 |
| | TCI-state 14 | TCI-state 13 | TCI-state 12 | TCI-state 12 |

S402. The network device sends one or more transmission configuration indicator lists.

Optionally, the network device may send system information. The system information includes the one or more transmission configuration indicator lists. In other words, the one or more transmission configuration indicator lists are included in the system information. The system information may be, for example, a synchronization signal/physical broadcast channel block (synchronization signal/PBCH block, SSB), a master information block (master information block, MIB), or a system information block (system information block, SIB). The PBCH refers to a physical broadcast channel (physical broadcast channel).

Based on this solution, the one or more transmission configuration indicator lists are sent in the system information, and the network device does not need to separately send the one or more transmission configuration indicator lists to each terminal device through dedicated signaling of the terminal device, so that signaling overheads can be reduced.

Alternatively, the network device may send radio resource control (radio resource control, RRC) signaling, and the RRC signaling includes the one or more transmission configuration indicator lists. In other words, the one or more transmission configuration indicator lists are included in the RRC signaling.

For example, the one or more transmission configuration indicator lists may be included in a "tci-StatesToAddModListCommon" information element in a "PDSCH-ConfigCommon" configuration of the RRC signaling. Certainly, the one or more transmission configuration indicator lists may also be included in another configuration or information element of the RRC signaling. This is not specifically limited in this application.

Based on this solution, when the one or more transmission configuration indicator lists are sent in RRC signaling, the network device may configure different transmission configuration indicator lists for different terminal devices, so that configuration flexibility can be improved.

Optionally, when the moving track of the network device changes, the network device may re-perform the foregoing steps S401 and S402 to update the transmission configuration indicator list.

It should be noted that the foregoing steps S401 and S402 do not need to be performed, that is, the foregoing steps S401 and S402 may not be performed. For example, in a case that the foregoing one or more transmission configuration indicator lists are predefined by a protocol, the foregoing steps S401 and S402 may not be performed.

S403. The network device determines a first TCI-state and a first transmission configuration indicator list.

It may be understood that the first transmission configuration indicator list is one of the one or more transmission configuration indicator lists in the foregoing step S401.

The first transmission configuration indicator list includes a plurality of TCI-states including the first TCI-state. In the first transmission configuration indicator list, beams corresponding to TCI-states after the first TCI-state are beams that are to sequentially provide a service for the terminal device. In other words, in the step S403, the network device may determine (or estimate) one or more beams that are to sequentially provide a service for the terminal device. In the one or more beams, a beam corresponding to the first TCI-state is the first beam that is to provide a service for the terminal device.

Optionally, in different embodiments of this application, the network device may determine the first TCI-state and the first transmission configuration indicator list in different manners.

In a possible implementation, the network device may determine the first TCI-state and the first transmission configuration indicator list based on a location of the terminal device.

In this implementation, before S403, the beam management method may further include: the network device acquires a location of the terminal device.

Optionally, the location of the terminal device may be reported by the terminal device upon a request of the network device, or may be determined by the network device by using an auxiliary positioning function. This is not specifically limited in this application.

Optionally, in a case that it is assumed that the terminal device is static, for example, when the terminal device is a smart device (such as a smart water meter) in the Internet of Things (Internet of Things, IoT), that the network device requests the terminal device to report a location of the terminal device may include:

The network device sends request information to the terminal device through a message 2 (message 2, Msg2) in a random access process. Correspondingly, the terminal device receives the request information from the network device through the message 2 in the random access process. The request information is for requesting the location of the terminal device.

Then, the terminal device sends the location information to the network device through a message 3 (message 3, Msg3) in the random access process. The location information indicates the location of the terminal device. Correspondingly, the network device receives the message 3 to acquire the location of the terminal device.

It should be noted that the request information is sent to the terminal device through the message 2 in the random access process may be understood as: the message 2 in the random access process is sent to the terminal device. The message 2 includes the request information. Similarly, that the location information is sent to the network device through the message 3 in the random access process may be understood as: the message 3 in the random access process is sent to the network device. The message 3 includes the location information.

In other words, in a random access process, the network device may request a location of the terminal device from the terminal device to acquire the location of the terminal device, so as to quickly acquire the location of the terminal device.

Optionally, after acquiring the location of the terminal device in the random access process by the foregoing method, the network device may store the location of the terminal device. Subsequently, when performing step S403, the network device reads the location of the terminal device stored in the network device, and determines the first TCI-state and the first transmission configuration indicator list according to the location.

Optionally, after acquiring the location of the terminal device, the network device may determine a TCI-state with a corresponding beam range including the location of the terminal device as the first TCI-state, and then determine, according to a movement direction and a moving track of the network device, beams that are to sequentially provide a service for the terminal device after the first TCI-state, so as to determine the first transmission configuration indicator list.

For example, based on the example in FIG. 5, it is assumed that the network device determines that the terminal device is located in a beam range of a beam 3 corresponding to a TCI-state 3 after acquiring the location of the terminal device, and the network device may determine the first TCI-state as the TCI-state 3. In addition, because the movement direction and the moving track of the network device are known, the network device may estimate that TCI-states corresponding to beams that sequentially provide services for the terminal device after the TCI-state 3 are a TCI-state 4 and a TCI-state 12. Based on the foregoing Table 2, the first transmission configuration indicator list is a TCI List 3.

In another possible implementation, the network device may determine the first TCI-state and the first transmission configuration indicator list according to an SSB Index reported by the terminal device.

Optionally, in a case that SSBs are in a one-to-one correspondence with the foregoing beams, that is, SSB Indexes are in a one-to-one correspondence with beam IDs, the terminal device may determine an SSB Index through downlink synchronization, that is, SSB search. Then, the terminal device may indicate the SSB Index to the network device. Because the SSB Indexes are in a one-to-one correspondence with the beam IDs, the network device may determine the beam ID and the TCI-state ID that correspond to the SSB Index, so as to determine the beam where the terminal device is located, thereby determining the TCI-state identified by the TCI-state ID corresponding to the SSB Index reported by the terminal device as the first TCI-state. Then, beams that are to sequentially provide a service for the terminal device after the first TCI-state are determined according to the movement direction and the moving track of the network device, so as to determine the first transmission configuration indicator list.

Optionally, in this possible implementation, before the terminal device reports the SSB Index, the network device may send information to the terminal device to request the terminal device to report the SSB Index.

S404. The network device determines whether the first transmission configuration indicator list is the same as a second transmission configuration indicator list.

After determining the first transmission configuration indicator list, the network device may compare the first transmission configuration indicator list with the second transmission configuration indicator list, perform the following steps S405a and S406a when the first transmission configuration indicator list is the same as the second transmission configuration indicator list, or perform the following steps S405b and S406b when the first transmission configuration indicator list is different from the second transmission configuration indicator list.

The second transmission configuration indicator list is a transmission configuration indicator list determined by the network device last time. In other words, the second transmission configuration indicator list is a transmission configuration indicator list that is last determined by the network device before the first transmission configuration indicator list is determined.

A solution when the first transmission configuration indicator list is the same as the second transmission configuration indicator list is described first as follows. Reference is made to the following steps S405a and S406a.

S405a. The network device sends first indication information to the terminal device. Accordingly, the terminal device receives the first indication information from the network device.

The first indication information indicates the terminal device to perform beam switching according to an arrangement order of TCI-states in the second transmission configuration indicator list. In other words, the first indication information indicates the terminal device to perform beam switching according to an arrangement order of TCI-states in the first transmission configuration indicator list.

Optionally, before the network device sends the first indication information, a beam that provides a service for the terminal device may be a beam corresponding to a previous TCI-state of a first TCI-state in the second transmission configuration indicator list. Therefore, when the first indication information indicates the terminal device to perform beam switching according to the arrangement order of the TCI-states in the second transmission configuration indicator list, a beam that is to provide a service for the terminal device is a beam corresponding to the first TCI-state.

For example, based on the example shown in FIG. 5, it is assumed that the first transmission configuration indicator list is the same as the second transmission configuration indicator list, and is a TCI List 3. Before the network device sends the first indication information, the beam that provides a service for the terminal device is a beam 9 corresponding to a TCI-state 9, the first TCI-state is a TCI-state 3, and a next beam that provides a service for the terminal device is a beam 3 corresponding to the TCI-state 3.

Alternatively, in some embodiments of this application, before the network device sends the first indication information, a beam that provides a service for the terminal device is not a beam corresponding to a previous TCI-state of the first TCI-state in the second transmission configuration indicator list, that is, there is one or more TCI-states between the TCI-state corresponding to the beam and the first TCI-state. In this case, it may be understood that a beam jump occurs. In this case, the first indication information may be used for indicating the first TCI-state, for example, includes an identifier of the first TCI-state. Correspondingly, the terminal device may determine that a next beam that provides a service for the terminal device is a beam corresponding to the first TCI-state.

For example, based on the example shown in FIG. 5, it is assumed that the first transmission configuration indicator list is the same as the second transmission configuration indicator list, and is a TCI List 3. Before the network device sends the first indication information, a beam that provides a service for the terminal device is a beam 8 corresponding to a TCI-state 8, and the first TCI-state is a TCI-state 3, then the first information may be used for indicating the TCI-state 3, and a next beam that provides a service for the terminal device is a beam 3 corresponding to the TCI-state 3.

It should be noted that the foregoing solution in which a beam jump occurs is merely a possible solution according to this application. In the following embodiments of this application, an example in which no beam jump occurs is used for description.

Optionally, the first indication information may be included in first information. The first information may be any one of DCI, RRC signaling, or a MAC CE.

Optionally, the network device may indicate the first indication information through a first field in the first information. The size of the first field may be 1 bit (bit). When the first information includes the first field, it indicates that the first information includes the first indication information, and the first indication information indicates the terminal device to perform beam switching according to an arrangement order of TCI-states in the second transmission configuration indicator list. Alternatively, when a value of 1 bit of the first field is "1", it indicates the first indication information; or when a value of 1 bit of the first field is "0", it indicates the first indication information.

S406a. The terminal device performs beam switching according to an arrangement order of TCI-states in the second transmission configuration indicator list.

It may be understood that the terminal device may determine, according to an arrangement order of TCI-states in the second transmission configuration indicator list, that a next beam that provides a service for the terminal device is the beam corresponding to the first TCI-state. Then, the terminal device may switch to the beam corresponding to the first TCI-state.

Optionally, the network device may immediately send the first indication information after determining that first transmission configuration indication information is the same as second transmission configuration indication information. In this case, the network device may further send first duration to the terminal device to indicate the terminal device to perform beam switching after the first duration starting from receiving the first indication information. Alternatively, after determining that the first transmission configuration indication information is the same as the second transmission configuration indication information, the network device sends the first indication information when further determining that the terminal device needs to perform beam switching. In this case, after receiving the first indication information, the terminal device may immediately perform beam switching.

A solution when the first transmission configuration indicator list is different from the second transmission configuration indicator list is described first as follows. Reference is made to the following steps S405b and S406b.

S405b. The network device sends second indication information to the terminal device. Accordingly, the terminal device receives the second indication information from the network device.

The second indication information indicates the first TCI-state and the first transmission configuration indicator list. For example, the second indication information includes an identifier of the first TCI-state and an identifier of the first transmission configuration indicator list.

Optionally, in this scenario, before the network device sends the second indication information, a TCI-state corresponding to a beam that provides a service for the terminal device does not belong to the first transmission configuration indicator list.

For example, based on the example shown in FIG. 5, it is assumed that before the network device sends the second indication information, a beam that provides a service for the terminal device is a beam 2 corresponding to a TCI-state 2, the second transmission configuration indicator list is a TCI List 2, the first TCI determined by the network device in step S403 is a TCI-state 3, and the first transmission configuration indicator list is a TCI List 3. The first transmission configuration indicator list is different from the second transmission configuration indicator list, the TCI-state 2 does not belong to the TCI List 3, and the network device sends the second indication information to the terminal device.

Optionally, the second indication information may be included in second information. The second information may be any one of DCI, RRC signaling, or a MAC CE.

Optionally, the second information and the first information may be of a same type. For example, both the second information and the first information are RRC signaling. Alternatively, the second information and the first information may be of different types. For example, the second information is RRC signaling, and the first information is DCI. This is not specifically limited in this application.

Optionally, when both the second information and the first information are RRC signaling, a structure of the RRC signaling includes a first field. The size of the first field is 1 bit. When a value of the 1 bit is a first value (for example, "0"), it indicates that a transmission configuration indicator list is not updated. In this case, the structure of the RRC signaling may not include another field, or the another field is filled with 0. When a value of the 1 bit is a second value (for example, "1"), it indicates that a transmission configuration indicator list is updated. In this case, the structure of the RRC signaling includes a second field. The second field indicates the transmission configuration indicator list and the TCI-state. For example, the second field includes a first subfield used for indicating the transmission configuration indicator list, and includes a second subfield used for indicating the TCI-state.

Optionally, the structure of the RRC signaling may be referred to as TCI-State-Update, the first field may be referred to as TCI-State-List-Update, the second field may be referred to as TCI-State-Info, the first subfield may be referred to as TCI-State-List-Id, and the second subfield may be referred to as TCI-State-Id. For example, the RRC signaling structure may be shown as follows:

```
          T CI-State-Update {
          TCI-State-List-Update
          TCI-State-Info{
          TCI-State-List-Id
          TCI-State-Id
          }
         }
```

It may be understood that names of the foregoing structures and fields are merely examples for description in this application, and there may be other names. This is not specifically limited in this application.

S406b. The terminal device performs beam switching according to the first TCI-state in the first transmission configuration indicator list.

Optionally, the terminal device may switch to the beam corresponding to the first TCI-state. Subsequently, in a case that a transmission configuration indicator list is not updated, beam switching is performed according to an arrangement order of TCI-states in the first transmission configuration indicator list.

Optionally, the network device may immediately send the second indication information after determining that first transmission configuration indication information is different from second transmission configuration indication information. In this case, the network device may further send second duration to the terminal device to indicate the terminal device to perform beam switching after the second duration starting from receiving the second indication information. Alternatively, after determining that first transmission configuration indication information is the same as second transmission configuration indication information, the network device sends the second indication information when further determining that the terminal device needs to perform beam switching. In this case, after receiving the second indication information, the terminal device may immediately perform beam switching.

It may be understood that, when performing the foregoing step S405a or S405b, the terminal device cannot predetermine that the network device sends the first indication information or the second indication information. Therefore, for the terminal device, the foregoing step S405a or S405b may be understood as that the terminal device receives the indication information from the network device. After receiving the indication information, the terminal device may further determine that the indication information is the first indication information or the second indication information, performs the foregoing step S406a when the indication information is the first indication information, or performs the foregoing step S406b when the indication information is the second indication information.

For example, the terminal device may determine, according to a location of the indication information, whether the indication information is the first indication information or the second indication information. For example, it is assumed that the first indication information is included in the DCI, the second indication information is included in the RRC signaling, if the terminal device detects the indication information in the DCI, the indication information is the first indication information, or if the terminal device detects the indication information in the RRC signaling, the indication information is the second indication information. Alternatively, the terminal device may determine, according to a quantity of bits occupied by the indication information, whether the indication information is the first indication information or the second indication information. For example, when the indication information occupies a relatively small quantity of bits, the indication information is the first indication information; or when the indication information occupies a relatively large quantity of bits, the indication information is the second indication information.

It should be noted that the foregoing step S403 and subsequent steps may be performed for a plurality of times to determine whether a beam corresponding to a TCI-state included in the transmission configuration indicator list previously determined by the network device can continue to provide a service for the terminal device. For example, the foregoing step S403 and subsequent steps may be performed periodically, or may be performed aperiodically. This is not specifically limited in this application.

Based on the solution of this application, one or more beams that are to sequentially provide a service for the terminal device are configured based on the transmission configuration indicator list. An updated first transmission configuration indicator list and a first TCI-state are indicated to the terminal device when the transmission configuration indicator list changes, so that the terminal device performs beam switching according to the first transmission configuration indicator list and the first TCI-state. The terminal device is indicated to perform beam switching according to an arrangement order of TCI-states in the original second transmission configuration indicator list when the transmission configuration indicator list does not change, so as to implement beam switching. In addition, the transmission configuration indicator list may configure a plurality of TCI-states for the terminal device, so that the transmission configuration indicator list is applicable to large-scale beam configuration in an NTN scenario. In addition, the network device does not need to send the TCI-state to the terminal device each time when the terminal device performs beam switching to indicate a to-be-switched beam to the terminal device, so that signaling overheads can be reduced, and beam switching efficiency can be improved.

Optionally, in some implementation scenarios of this application, the network device may group beams according to a movement direction of the network device, and a plurality of beams corresponding to a plurality of TCI-states included in each transmission configuration indicator list belong to a same group. Each group of beams may correspond to one or more transmission configuration indicator lists. After beam grouping is performed, each group of beams may be considered as beams in a same cell.

For example, based on the example shown in FIG. 5, as shown in FIG. 6, beams are divided into 3 groups in a movement direction of the network device by two dashed lines. With reference to Table 2, a transmission configuration indicator list corresponding to a first group of beams may be a TCI List 0; a transmission configuration indicator list corresponding to a second group of beams may be a TCI List 1 and a TCI List 2; and a transmission configuration indicator list corresponding to a third group of beams may be a TCI List 3 and a TCI List 4.

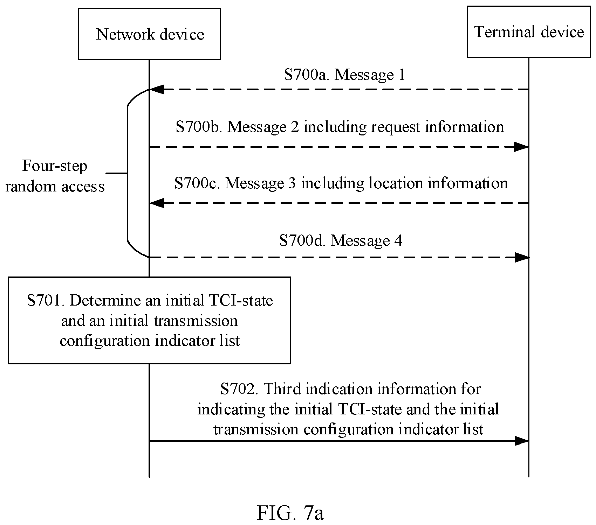

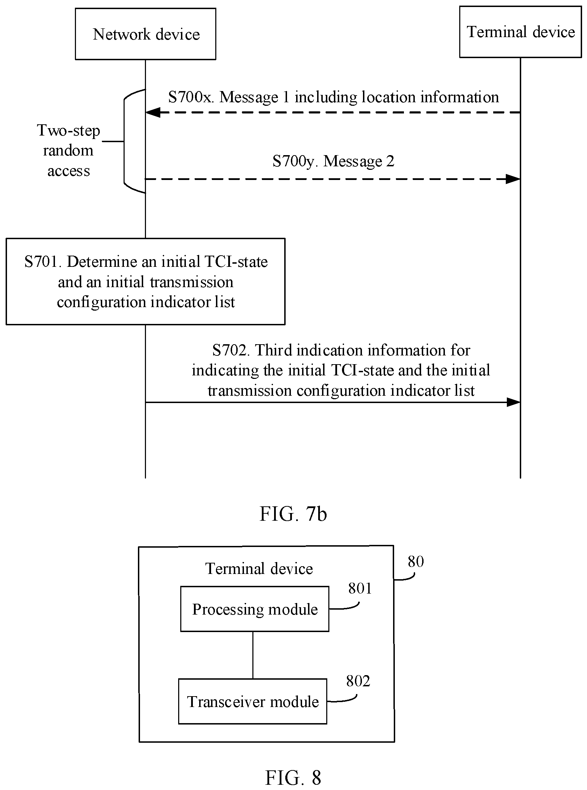

In addition, in some implementation scenarios of this application, before performing step S403 shown in FIG. 4, when the terminal device initially accesses the network device, the methods shown in FIG. 7a or FIG. 7b may also be performed. The method includes the following steps.

S701. A network device determines an initial transmission configuration indicator list and an initial TCI-state.

The initial transmission configuration indicator list includes a plurality of TCI-states including the initial TCI-state. In the initial transmission configuration indicator list, beams corresponding to TCI-states after the initial TCI-state are beams that are to sequentially provide a service for the terminal device.

It may be understood that the initial transmission configuration indicator list is a transmission configuration indicator list in one or more transmission configuration indicator lists in the foregoing step S401.

Optionally, the network device may determine the initial transmission configuration indicator list and the initial TCI-state through the following two implementations.

In a possible implementation, the network device may determine the initial transmission configuration indicator list and the initial TCI-state according to a location at which the terminal device accesses the network device.

Optionally, the location at which the terminal device accesses the network device is reported by the terminal device in a random access (random access, RA) process. The random access process may be a four-step random access process, or may be a two-step random access process.

As shown in FIG. 7a, the four-step random access process includes steps S700a to S700d. Steps S700a to S700d are the four-step random access process.

S700a. The terminal device sends a message 1 (message 1, Msg1) to the network device. Correspondingly, the network device receives the message 1 from the terminal device.

For related descriptions of the message 1, refer to an existing standard. Details are not described herein again.

S700b. The network device sends a message 2 to the terminal device. Correspondingly, the terminal device receives the message 2 from the network device.

The message 2 may include request information. The request information is for requesting a location of the terminal device. The location is a location at which the terminal device is located when accessing the network device.

Optionally, the network device may indicate the request information through 1 bit in the message 2. For example, when a value of the 1 bit is " 1", it indicates the request information, that is, the network device requests the location of the terminal device from the terminal device. When a value of the 1 bit is "0", it indicates that the terminal device does not need to report location information of the terminal device.

S700c. The terminal device sends a message 3 to the network device. Correspondingly, the network device receives the message 3 from the terminal device.

The message 3 includes location information, and the location information indicates the location of the terminal device.

S700d. The network device sends a message 4 to the terminal device. Correspondingly, the terminal device receives the message 4 from the network device.

It may be understood that the message 1 to the message 4 are the message 1 to the message 4 in the four-step random access process.

It should be noted that the foregoing steps S700a to S700c are performed before step S701. There is no necessary sequence between S700d and S701. Step S700d may be performed before step S701, or step S701 may be performed before step S700d, or step S700d and step S701 may be performed at the same time.

As shown in FIG. 7b, the two-step random access process includes step S700x and step S700y. Step S700x and step S700y are the two-step random access process.

S700x. The terminal device sends a message 1 to the network device. Correspondingly, the network device receives the message 1 from the terminal device.

The message 1 includes location information. The location information indicates the location of the terminal device.

It may be understood that, in the two-step random access process, the terminal device has a physical uplink shared channel (physical uplink shared channel, PUSCH) resource when sending a preamble (preamble) by using the message 1, so that the location information may be reported in the message 1.

S700y. The network device sends a message 2 to the terminal device. Correspondingly, the terminal device receives the message 2 from the network device.

For related descriptions of the message 2, refer to an existing standard. Details are not described herein again.

It may be understood that, in this case, the message 1 and the message 2 are the message 1 and the message 2 in the two-step random access process.

It should be noted that the foregoing step S700x is performed before step S701. There is no necessary sequence between S700y and S701. Step S700y may be performed before step S701, or step S701 may be performed before step S700y, or step S700y and step S701 may be performed at the same time.

In step S701, for an implementation in which the network device determines the initial TCI-state and the initial transmission configuration indicator list based on the location of the terminal device, refer to related descriptions in step S403. Details are not described herein again.

In another possible implementation, the network device may determine the initial TCI-state and the initial transmission configuration indicator list through a random access channel occasion (RACH occasion, RO) on which the terminal device initiates random access.

Optionally, in a case that the SSBs are in a one-to-one correspondence with the foregoing beams, that is, the SSB indexes are in a one-to-one correspondence with the beam IDs, the terminal device may determine an initial SSB index through downlink synchronization, that is, SSB search. Then, the terminal device initiates random access based on the RO corresponding to the initial SSB index, and the network device may determine, according to the RO, the initial SSB index of downlink synchronization of the terminal device, so as to determine a TCI-state identified by a TCI-state ID corresponding to the initial SSB index as the initial TCI-state. Then, beams that are to sequentially provide a service for the terminal device after the initial TCI-state are determined according to a movement direction and a moving track of the network device, so as to determine the initial transmission configuration indicator list.

It should be noted that the foregoing method for acquiring, by the network device, the location of the terminal device or the SSB Index of the downlink synchronization of the terminal device through the random access process may also be independently performed, that is, is independently performed without depending on another step in this application.

S702. The network device sends third indication information to the terminal device. Accordingly, the terminal device receives the third indication information from the network device.

The third indication information indicates an initial TCI-state and an initial transmission configuration indicator list.

Optionally, after receiving the third indication information, the terminal device may access a beam corresponding to the initial TCI-state to communicate with the network device.

Optionally, for the four-step random access process, when step S701 is performed before step S700d, the third indication information may be included in the message 4 in S700d. In this case, S702 and S700d are combined into one step. For the two-step random access process, when step S701 is performed before step S700y, the third indication information may be included in the message 2 in S700y. In this case, S702 and S700y are combined into one step.

Based on this solution, an initially accessed beam may be configured for the terminal device. Subsequently, step S403 and subsequent steps in FIG. 4 may be performed to determine whether the transmission configuration indicator list and the TCI-state need to be changed. When the transmission configuration indicator list and the TCI-state change, an updated transmission configuration indicator list and TCI-state are indicated to the terminal device, so that the terminal device performs beam switching according to the TCI-state in the updated transmission configuration indicator list. When the transmission configuration indicator list and the TCI-state change do not change, the terminal device is indicated to perform beam switching according to the initial transmission configuration indicator, so as to implement beam management.

In the embodiment shown in FIG. 4, FIG. 7a, or FIG. 7b, the actions of the network device may be performed by a processor 301 in a network device 30 shown in FIG. 2 by invoking an application program code stored in a memory 302 to indicate the network device to perform the actions. In the embodiment shown in FIG. 4, FIG. 7a, or FIG. 7b, the actions of the terminal device may be performed by a processor 401 in a terminal device 40 shown in FIG. 2 by invoking an application program code stored in a memory 402 to indicate the terminal device to perform the actions. This is not limited in this embodiment.

In various embodiments of this application, unless otherwise stated or there is a logic conflict, terms and/or descriptions between different embodiments are consistent and may be mutually referenced, and technical features in different embodiments may be combined according to an internal logical relationship thereof, so as to form a new embodiment.

It may be understood that, in various embodiments above, methods and/or steps implemented by the terminal device may also be implemented by a component (for example, a chip or a circuit) that can be used in the terminal device, and methods and/or steps implemented by the network device may also be implemented by a component (for example, a chip or a circuit) that can be used in the network device.

The foregoing mainly describes the solutions provided in this application from the perspective of interaction between devices. Correspondingly, an embodiment of this application further provides a communication apparatus, and the communication apparatus is configured to implement the foregoing methods. The communication apparatus may be the terminal device in the foregoing method embodiments, an apparatus including the foregoing terminal device, or a component that can be used in the terminal device. Alternatively, the communication apparatus may be the network device in the foregoing method embodiments, an apparatus including the foregoing network device, or a component that can be used in the network device. It may be understood that, to implement the foregoing functions, the communication apparatus includes a corresponding hardware structure and/or software module for performing the functions. A person skilled in the art should be easily aware that units, algorithms, and steps in the examples described with reference to the embodiments disclosed in this specification can be implemented in a form of hardware or a combination of hardware and computer software in this application. Whether a function is performed by hardware or hardware driven by computer software depends on a particular application and a design constraint of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and there may be other division in an actual implementation.

For example, the communication apparatus is the terminal device in the foregoing method embodiments. FIG. 8 is a schematic diagram of a structure of a terminal device 80. The terminal device 80 includes a processing module 801 and a transceiver module 802. The transceiver module 802 may also be referred to as a transceiver unit, and is configured to implement a sending and/or receiving function. For example, the transceiver module 802 may be a transceiver circuit, a transmitter receiver, a transceiver, or a communication interface.

Optionally, the transceiver module 802 may include a receiving module and a sending module, which are respectively configured to perform receiving and sending steps performed by the terminal device in the foregoing method embodiments. The processing module 801 may be configured to perform processing steps (for example, determining and acquiring) performed by the terminal device in the foregoing method embodiments.

The transceiver module 802 is configured to receive indication information from a network device. The processing module 801 is configured to perform beam switching according to an arrangement order of TCI-states in a second transmission configuration indicator list when the indication information is first indication information; or the processing module 801 is configured to perform beam switching according to a first TCI-state in a first transmission configuration indicator list when the indication information is second indication information. The first transmission configuration indicator list includes a plurality of TCI-states including the first TCI-state. Beams corresponding to TCI-states after the first TCI-state are beams that are to sequentially provide a service for the terminal device.

Optionally, the transceiver module 802 is further configured to receive one or more transmission configuration indicator lists. The one or more transmission configuration indicator lists include a first transmission configuration indicator list and/or a second transmission configuration indicator list.

Optionally, the transceiver module 802 is further configured to receive request information from the network device through a message 2 in a random access process. The request information is for requesting a location of the terminal device. The transceiver module 802 is further configured to send location information to the network device through a message 3 in the random access process. The location information indicates the location of the terminal device.

All related content of various steps in the foregoing method embodiments may be cited in function descriptions of corresponding functional modules. Details are not described herein again.

In this embodiment, the terminal device 80 is presented in a form of various functional modules obtained through division in an integrated manner. The "module" herein may be a specific ASIC, a circuit, a processor and a memory that execute one or more software or firmware programs, an integrated logic circuit, and/or another component that can provide the foregoing functions. In a simple embodiment, a person skilled in the art may figure out that the terminal device 80 may be in a form of a terminal device 40 shown in FIG. 2.

For example, the processor 401 in the terminal device 40 shown in FIG. 2 may invoke the computer-executable instructions stored in the memory 402, so that the terminal device 40 performs the beam management method in the foregoing method embodiment.

Specifically, the processor 401 in the terminal device 40 shown in FIG. 2 may invoke the computer-executable instructions stored in the memory 402 to implement functions/implementation processes of the processing module 801 and the transceiver module 802 in FIG. 8. Alternatively, the processor 401 in the terminal device 40 shown in FIG. 2 may invoke the computer-executable instructions stored in the memory 402 to implement functions/implementation processes of the processing module 801 in FIG. 8, and the transceiver 403 in the terminal device 40 shown in FIG. 2 may implement functions/implementation processes of the transceiver module 802 in FIG. 8.

The terminal device 80 according to this embodiment may perform the foregoing beam management method. Therefore, for a technical effect that can be achieved by the terminal device 80, refer to the foregoing method embodiment. Details are not described herein again.

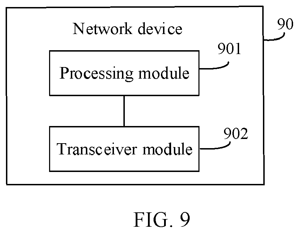

For example, the communication apparatus is the network device in the foregoing method embodiment. FIG. 9 is a schematic diagram of a structure of a network device 90. The network device 90 includes a processing module 901 and a transceiver module 902. The transceiver module 902 may also be referred to as a transceiver unit, and is configured to implement a sending and/or receiving function. For example, the transceiver module 902 may be a transceiver circuit, a transmitter receiver, a transceiver, or a communication interface.

Optionally, the transceiver module 902 may include a receiving module and a sending module, which are respectively configured to perform receiving and sending steps performed by the network device in the foregoing method embodiments. The processing module 901 may be configured to perform processing steps (for example, determining and acquiring) performed by the network device in the foregoing method embodiments.

The processing module 901 is configured to determine a first TCI-state and a first transmission configuration indicator list. The first transmission configuration indicator list includes a plurality of TCI-states including the first TCI-state. In the first transmission configuration indicator list, beam corresponding to TCI-states after the first TCI-states are beams that are to sequentially provide a service for a terminal device. When the first transmission configuration indicator list is the same as a second transmission configuration indicator list, the transceiver module 902 is configured to send first indication information to the terminal device. The first indication information indicates the terminal device to perform beam switching according to an arrangement order of TCI-states in the second transmission configuration indicator list. The second transmission configuration indicator list is a transmission configuration indicator list determined by the network device last time. When the first transmission configuration indicator list is different from the second transmission configuration indicator list, the transceiver module 902 is configured to send second indication information to the terminal device. The second indication information indicates the first TCI-state and the first transmission configuration indicator list.

Optionally, the transceiver module 902 is further configured to send one or more transmission configuration indicator lists. The one or more transmission configuration indicator lists include a first transmission configuration indicator list and/or a second transmission configuration indicator list.

Optionally, the processing module 901 is specifically configured to determine the first TCI-state and the first transmission configuration indicator list based on a location of the terminal device.

Optionally, the transceiver module 902 is further configured to send request information to the terminal device through a message 2 in a random access process. The request information is for requesting the location of the terminal device. The transceiver module 902 is further configured to receive location information from the terminal device through the message 2 in the random access process. The location information indicates the location of the terminal device.

All related content of various steps in the foregoing method embodiments may be cited in function descriptions of corresponding functional modules. Details are not described herein again.

In this embodiment, the network device 90 is presented in a form of function modules obtained through division in an integrated manner. The "module" herein may be a specific ASIC, a circuit, a processor and a memory that execute one or more software or firmware programs, an integrated logic circuit, and/or another component that can provide the foregoing functions. In a simple embodiment, a person skilled in the art may figure out that the network device 90 may be in a form of a network device 30 shown in FIG. 2.

For example, the processor 301 in the network device 30 shown in FIG. 2 may invoke computer-executable instructions stored in a memory 302, so that the network device 30 performs the beam management method in the foregoing method embodiment.

Specifically, the processor 301 in the network device 30 shown in FIG. 2 may invoke the computer-executable instructions stored in the memory 302 to implement functions/implementation processes of the processing module 901 and the transceiver module 902 in FIG. 9. Alternatively, the processor 301 in the network device 30 shown in FIG. 2 may invoke the computer-executable instructions stored in the memory 302 to implement functions/implementation processes of the processing module 901 in FIG. 9, and the transceiver 303 in the network device 30 shown in FIG. 2 may implement functions/implementation processes of the transceiver module 902 in FIG. 9.

The network device 90 according to this embodiment may perform the foregoing beam management method. Therefore, for a technical effect that can be achieved by the network device 90, refer to the foregoing method embodiment. Details are not described herein again.

Optionally, an embodiment of this application further provides a communication apparatus. The communication apparatus includes a processor, configured to implement the method in any one of the foregoing method embodiments. In a possible design, the communication apparatus further includes a memory. The memory is configured to store necessary program instructions and necessary data. The processor may invoke program code stored in the memory to indicate the communication apparatus to perform the method in any one of the foregoing method embodiments. Certainly, the communication apparatus may not include a memory. In another possible design, the communication apparatus further includes an interface circuit. The interface circuit is a code/data read/write interface circuit. The interface circuit is configured to receive computer-executable instructions (where the computer-executable instructions are stored in a memory, and may be directly read from the memory, or may be read via another component) and transmit the computer-executable instructions to the processor. The communication apparatus may be a chip or a chip system. When the communication apparatus is a chip system, the communication apparatus may include a chip, or may include a chip and another discrete device. This is not specifically limited in this embodiment of this application.

Optionally, an embodiment of this application further provides a communication apparatus (for example, the communication apparatus may be a chip or a chip system). The communication apparatus includes an interface circuit and a logic circuit. The interface circuit is configured to acquire input information and/or output output information. The logic circuit is configured to perform the method in any one of the foregoing method embodiments, and perform processing and/or generate output information based on the input information.

When the communication apparatus is configured to implement a function of the terminal device in the foregoing method embodiment, the input information may be one or more of first indication information, second indication information, one or more transmission configuration indicator lists, and request information. The output information may be the foregoing location information.

When the communication apparatus is configured to implement a function of the network device in the foregoing method embodiment, the output information may be one or more of the foregoing first indication information, second indication information, one or more transmission configuration indicator lists, and request information. The input information may be the foregoing location information.

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When the computer program instructions are loaded and executed on a computer, the procedure or functions according to embodiments of this application are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium (for example, a solid state drive (solid state drive, SSD)). In embodiments of this application, the computer may include the apparatus described above.

Although this application is described with reference to various embodiments, in a process of implementing this application that claims protection, a person skilled in the art may understand and implement another variation of the disclosed embodiments by viewing the appended drawings, disclosed content, and the appended claims. In the claims, "comprising" (comprising) does not exclude another component or another step, and "a" or "one" does not exclude a case of multiple. A single processor or another unit may implement several functions enumerated in the claims. Some measures are set forth in dependent claims that are different from each other, but this does not mean that these measures cannot be combined to achieve a great effect.

Although this application is described with reference to specific features and the embodiments thereof, it is clear that various modifications and combinations may be made to them without departing from the spirit and scope of this application. Correspondingly, this specification and the accompanying drawings are merely example description of this application defined by the appended claims, and are considered as any or all of modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A beam management method, wherein the method comprises:
receiving indication information from a network device; and
performing beam switching according to an arrangement order of transmission configuration indicator states TCI-states in a second transmission configuration indicator list when the indication information is first indication information; or
performing beam switching according to a first TCI-state in a first transmission configuration indicator list when the indication information is second indication information, wherein the first transmission configuration indicator list comprises a plurality of TCI-states comprising the first TCI-state, and in the first transmission configuration indicator list, beams corresponding to TCI-states after the first TCI-state are beams that are to sequentially provide a service for a terminal device.

2. The method according to claim 1, wherein the first indication information indicates the terminal device to perform beam switching according to the arrangement order of the TCI-states in the second transmission configuration indicator list; and
the second indication information indicates the first TCI-state and the first transmission configuration indicator list.

3. The method according to claim 1 or 2, before the receiving indication information from a network device, further comprising:
receiving one or more transmission configuration indicator lists, wherein the one or more transmission configuration indicator lists comprise the first transmission configuration indicator list and/or the second transmission configuration indicator list.

4. The method according to claim 3, wherein the one or more transmission configuration indicator lists are comprised in system information, or comprised in radio resource control RRC signaling.

5. The method according to any one of claims 1 to 4, wherein the method further comprises:
receiving request information from the network device through a message 2 in a random access process, wherein the request information is for requesting a location of the terminal device; and
sending location information to the network device through a message 3 in the random access process, wherein the location information indicates the location of the terminal device.

6. The method according to any one of claims 1 to 5, wherein the first indication information or the second indication information is comprised in any one of the following:
downlink control information DCI;
a media access control control element MAC CE; and
radio resource control RRC signaling.

7. A beam management method, comprising:
determining a first transmission configuration indicator state TCI-state and a first transmission configuration indicator list, wherein the first transmission configuration indicator list comprises a plurality of TCI-states comprising the first TCI-state, and in the first transmission configuration indicator list, beams corresponding to TCI-states after the first TCI-state are beams that are to sequentially provide a service for a terminal device; and
sending first indication information to the terminal device when the first transmission configuration indicator list is the same as a second transmission configuration indicator list, wherein the first indication information indicates the terminal device to perform beam switching according to an arrangement order of TCI-states in the second transmission configuration indicator list, and the second transmission configuration indicator list is a transmission configuration indicator list determined by a network device last time; or
sending second indication information to the terminal device when the first transmission configuration indicator list is different from a second transmission configuration indicator list, wherein the second indication information indicates the first TCI-state and the first transmission configuration indicator list.

8. The method according to claim 7, before the sending first indication information or second indication information to the terminal device, the method further comprises:
sending one or more transmission configuration indicator lists, wherein the one or more transmission configuration indicator lists comprise the first transmission configuration indicator list and/or the second transmission configuration indicator list.

9. The method according to claim 8, wherein the one or more transmission configuration indicator lists are comprised in system information, or comprised in radio resource control RRC signaling.

10. The method according to any one of claims 7 to 9, wherein the determining a first TCI-state and a first transmission configuration indicator list comprises:
determining the first TCI-state and the first transmission configuration indicator list based on a location of the terminal device.

11. The method according to claim 10, the method further comprises:
sending request information to the terminal device through a message 2 in a random access process, wherein the request information is for requesting the location of the terminal device; and
receiving location information from the terminal device through a message 3 in the random access process, wherein the location information indicates the location of the terminal device.

12. The method according to any one of claims 7 to 11, wherein the first indication information or the second indication information is comprised in any one of the following:
downlink control information DCI;
a media access control control element MAC CE; and
radio resource control RRC signaling.

13. A communication apparatus, wherein the communication apparatus comprises a processing module and a transceiver module, wherein
the transceiver module is configured to receive indication information from a network device; and
the processing module is configured to perform beam switching according to an arrangement order of transmission configuration indicator states TCI-states in a second transmission configuration indicator list when the indication information is the first indication information; or
the processing module is configured to perform beam switching according to a first TCI-state in a first transmission configuration indicator list when the indication information is second indication information, wherein the first transmission configuration indicator list comprises a plurality of TCI-states comprising the first TCI-state, and in the first transmission configuration indicator list, beams corresponding to TCI-states after the first TCI-state are beams that are to sequentially provide a service for the communication apparatus.

14. The communication apparatus according to claim 13, wherein the first indication information indicates the communication apparatus to perform beam switching according to the arrangement order of the TCI-states in the second transmission configuration indicator list; and
the second indication information indicates the first TCI-state and the first transmission configuration indicator list.

15. The communication apparatus according to claim 13 or 14, wherein the transceiver module is further configured to receive one or more transmission configuration indicator lists, and the one or more transmission configuration indicator lists comprise the first transmission configuration indicator list and/or the second transmission configuration indicator list.

16. The communication apparatus according to claim 15, wherein the one or more transmission configuration indicator lists are comprised in system information, or comprised in radio resource control RRC signaling.

17. The communication apparatus according to any one of claims 13 to 16, wherein the transceiver module is further configured to receive request information from the network device through a message 2 in a random access process, and the request information is for requesting a location of the communication apparatus; and
the transceiver module is further configured to send location information to the network device through a message 3 in the random access process, wherein the location information indicates the location of the communication apparatus.

18. The communication apparatus according to any one of claims 13 to 17, wherein the first indication information or the second indication information is comprised in any one of the following:
downlink control information DCI;
a media access control control element MAC CE; and
radio resource control RRC signaling.

19. A communication apparatus, wherein the communication apparatus comprises a processing module and a transceiver module, wherein
the processing module is configured to determine a first transmission configuration indicator state TCI-state and a first transmission configuration indicator list, the first transmission configuration indicator list comprises a plurality of TCI-states comprising the first TCI-state, and in the first transmission configuration indicator list, beams corresponding to TCI-states after the first TCI-state are beams that are to sequentially provide a service for a terminal device; and
when the first transmission configuration indicator list is the same as a second transmission configuration indicator list, the transceiver module is configured to send first indication information to the terminal device, the first indication information indicates the terminal device to perform beam switching according to an arrangement order of TCI-states in the second transmission configuration indicator list, and the second transmission configuration indicator list is a transmission configuration indicator list determined by the communication apparatus last time; or
when the first transmission configuration indicator list is different from a second transmission configuration indicator list, the transceiver module is configured to send second indication information to the terminal device, and the second indication information indicates the first TCI-state and the first transmission configuration indicator list.

20. The communication apparatus according to claim 19, wherein the transceiver module is further configured to send one or more transmission configuration indicator lists, and the one or more transmission configuration indicator lists comprise the first transmission configuration indicator list and/or the second transmission configuration indicator list.

21. The communication apparatus according to claim 20, wherein the one or more transmission configuration indicator lists are comprised in system information, or comprised in radio resource control RRC signaling.

22. The communication apparatus according to any one of claims 19 to 21, wherein the processing module is specifically configured to determine the first TCI-state and the first transmission configuration indicator list based on a location of the terminal device.

23. The communication apparatus according to claim 22, wherein the transceiver module is further configured to send request information to the terminal device through a message 2 in a random access process, and the request information is for requesting the location of the terminal device; and
the transceiver module is further configured to receive location information from the terminal device through a message 3 in the random access process, and the location information indicates the location of the terminal device.

24. The communication apparatus according to any one of claims 19 to 23, wherein the first indication information or the second indication information is comprised in any one of the following:
downlink control information DCI;
a media access control control element MAC CE; and
radio resource control RRC signaling.

25. A communication apparatus, comprising a processor, wherein
the processor is configured to execute a computer program or instructions stored in a memory, so that the communication apparatus performs the method according to any one of claims 1 to 6, or the communication apparatus performs the method according to any one of claims 7 to 12.

26. A communication apparatus, comprising an interface circuit and a logic circuit, wherein
the interface circuit is configured to acquire input information and/or output output information; and
the logic circuit is configured to perform the method according to any one of claims 1 to 6, or perform the method according to any one of claims 7 to 12, and to perform processing and/or generate the output information based on the input information.

27. A computer-readable storage medium, configured to store instructions, wherein when the instructions are executed, the method according to any one of claims 1 to 6 is implemented, or the method according to any one of claims 7 to 12 is implemented.

28. A communication system, wherein the communication system comprises the communication apparatus according to any one of claims 13 to 18 and the communication apparatus according to any one of claims 19 to 24.

29. A communication apparatus, comprising a processor, wherein
the processor is configured to read a computer program or instructions stored in a memory, and execute the computer program or instructions, so that the communication apparatus performs the method according to any one of claims 1 to 6, or the communication apparatus performs the method according to any one of claims 7 to 12.

30. A computer program product, wherein when the computer program product runs on a communication apparatus, the communication apparatus is enabled to perform the method according to any one of claims 1 to 6, or the communication apparatus performs the method according to any one of claims 7 to 12.
